(19) **Europäisches Patentamt / European Patent Office / Office européen des brevets**

(11) **EP 3 588 301 B1**

(12) # FASCICULE DE BREVET EUROPEEN

(45) Date de publication et mention de la délivrance du brevet:
**08.05.2024 Bulletin 2024/19**

(21) Numéro de dépôt: **19180269.3**

(22) Date de dépôt: **14.06.2019**

(51) Classification Internationale des Brevets (IPC):
*G06F 11/34* (2006.01)    *G06F 11/30* (2006.01)

(52) Classification Coopérative des Brevets (CPC):
**G06F 11/3485; G06F 11/302; G06F 11/3051; G06F 11/3409; G06F 11/3452;** G06F 2201/865

(54) **DETERMINATION AUTOMATIQUE ET AUTO-OPTIMISEE DES PARAMETRES D'EXECUTION D'UNE APPLICATION LOGICIELLE SUR UNE PLATEFORME DE TRAITEMENT DE L'INFORMATION**

AUTOMATISCHE UND SELBSTOPTIMIERTE BESTIMMUNG DER AUSFÜHRUNGSPARAMETER EINER SOFTWAREANWENDUNG AUF EINER INFORMATIONSVERARBEITUNGSPLATTFORM

AUTOMATIC AND AUTO-OPTIMISED DETERMINATION OF PARAMETERS FOR EXECUTING A SOFTWARE APPLICATION ON AN INFORMATION PROCESSING PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2018 FR 1855720**

(43) Date de publication de la demande:
**01.01.2020 Bulletin 2020/01**

(73) Titulaires:
• **Bull SAS**
**78340 Les Clayes-sous-Bois (FR)**
• **Commissariat à l'énergie atomique et aux énergies alternatives**
**75015 Paris (FR)**

(72) Inventeurs:
• **COUVEE, Philippe**
**38190 VILLARD BONNOT (FR)**
• **GORET, Gaël**
**38140 LA MURETTE (FR)**
• **PHAM, Trong-Ton**
**38000 GRENOBLE (FR)**
• **VINCENT, Lionel**
**38600 FONTAINE (FR)**
• **NABE, Mamady**
**38400 SAINT MARTIN D'HERES (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
• **CHEN CHEN-CHUN ET AL: "Using Deep Learning to Predict and Optimize Hadoop Data Analytic Service in a Cloud Platform", 2017 IEEE 15TH INTL CONF ON DEPENDABLE, AUTONOMIC AND SECURE COMPUTING, 15TH INTL CONF ON PERVASIVE INTELLIGENCE AND COMPUTING, 3RD INTL CONF ON BIG DATA INTELLIGENCE AND COMPUTING AND CYBER SCIENCE AND TECHNOLOGY CONGRESS(DASC/PICOM/DATACOM/CYBERS CI, 6 novembre 2017 (2017-11-06), pages 909-916, XP033342688, DOI: 10.1109/DASC-PICOM-DATACOM-CYBERSCITE C.201 7.153**
• **THAMSEN LAURITZ ET AL: "Selecting resources for distributed dataflow systems according to runtime targets", 2016 IEEE 35TH INTERNATIONAL PERFORMANCE COMPUTING AND COMMUNICATIONS CONFERENCE (IPCCC), IEEE, 9 décembre 2016 (2016-12-09), pages 1-8, XP033045285, DOI: 10.1109/PCCC.2016.7820629**

- ZHANG YUNQUAN ET AL: "Parallel Processing Systems for Big Data: A Survey", PROCEEDINGS OF THE IEEE, IEEE. NEW YORK, US, vol. 104, no. 11, 1 novembre 2016 (2016-11-01), pages 2114-2136, XP011626080, ISSN: 0018-9219, DOI: 10.1109/JPROC.2016.2591592 [extrait le 2016-10-19]

**Description**

DOMAINE DE L'INVENTION

L'invention concerne le domaine de l'optimisation des exécutions d'applications logicielles sur des plateformes de traitement de l'information.

Elle s'applique particulièrement bien au domaine du calcul à haute performance et des supercalculateurs et notamment de leurs évolutions vers l'« exascale ».

CONTEXTE DE L'INVENTION

L'évolution de taille et la complexité croissante des plateformes de traitement de l'information actuelles impliquent déjà un changement de paradigme dans leur utilisation et dans leur administration. En effet, de plus en plus, l'intervention humaine se révèle difficile au vu de la quantité d'information impliquée dans le maintien d'un état de fonctionnement optimal.

De plus, les futurs calculateurs exascale, c'est-à-dire visant une puissance de l'ordre de l'exa-flop, intégreront un nombre beaucoup plus élevé de noeuds de calcul, et les méthodes d'accès aux données actuelles de type systèmes de fichiers parallèles POSIX impliquant une cohérence forte des données et dont la mise à l'échelle est assez limitée, ne seront plus utilisables.

Des solutions alternatives existent. Certaines cherchent à étendre le modèle POSIX : on peut notamment citer les technologies de type « *burst buffers* », telles que décrites dans N. Liu, J. Cope, P. Carns, C. Carothers, R. Ross, G. Grider, A. Crume and C. Maltzahn. « On the rôle of burst buffers in leadership-class storage systems ", in IEEE 28th Symposium on Mass Storage Sytems and Technologies (MSST), 2012,

D'autres solutions proposent d'autres modèles d'accès, telles que le stockage objet, décrit par exemple dans M. Mesnier, G. R. Ganger, and E. Riedel. « Object-based storage », in IEEE Communications Magazine, 41(8):84-90, 2003, ou DAOS, décrit par exemple dans Breitenfeld, M. Scot, et al. "DAOSfor Extreme-scale Systems in Scientific Applications", in arXiv preprint arXiv:1712.00423, 2017

L'article CHEN CHEN-CHUN ET AL: "Using Deep Learning to Predict and Optimize Hadoop Data Analytic Service in a Cloud Platform",2017 IEEE 15TH INTL CONF ON DEPENDABLE, AUTONOMIC AND SECURE COMPUTING, 15TH INTL CONF ON PERVASIVE INTELLIGENCE AND COMPUTING, 3RD INTL CONF ON BIG DATA INTELLIGENCE AND COMPUTING AND CYBER SCIENCE AND TECHNOLOGY CONGRESS(DASC/PICOM/DATACOM/CYBERSCI, 6 novembre 2017 (2017-11-06), pages 909-916, XP033342688,DOI: 10.1109/DASC-PICOM-DATACOM-CYBERSCITEC.2017.153 décrit l'optimisation automatique de paramètres d'exécution d'une application logicielle selon le préambule des revendications indépendantes.

Cependant, ces solutions alternatives impliquent une mise en oeuvre à la demande, avec des paramètres spécifiques adaptés au comportement des applications pour lesquelles elles seront instanciées. L'état de l'art aujourd'hui est que ce paramétrage est entièrement manuel, à la charge des utilisateurs qui n'ont que très rarement les compétences pour le définir.

Pour rendre cette automatisation possible, il sera donc indispensable d'avoir une compréhension très fine du comportement des applications, afin d'appliquer les stratégies d'accélération d'entrées-sorties les plus pertinentes, et participer ainsi à l'optimisation du fonctionnement du supercalculateur.

RESUME DE L'INVENTION

Le but de la présente invention est de fournir un procédé et un système palliant au moins partiellement les inconvénients précités.

Notamment, l'invention permet de s'abstraire de toutes connaissances sur les applications et sur leurs comportements et de ne pas se baser sur des a priori sur les données à considérer. Dans la mesure où les applications à considérer peuvent être très hétérogènes dans leurs comportements, il peut être en effet extrêmement compliqué de modéliser leur comportement particulier. L'invention met ainsi en oeuvre un mécanisme de type "boîte noire", et propose ainsi une plus grande facilité d'utilisation et un plus grand champ d'application.

Plus particulièrement, l'invention vise à fournir une optimisation de l'exécution des applications logicielles qui soit automatisée, c'est-à-dire qui minimise, voire rend non-indispensable, l'intervention humaine dans le paramétrage de l'exécution de l'application.

A cette fin, la présente invention propose un procédé pour l'optimisation des paramètres d'exécution d'une application logicielle sur une plateforme de traitement de l'information, consistant à optimiser de façon itérative lesdits paramètres à chaque exécution de ladite application, dans lequel

- pour chaque exécution de ladite application, on effectue et stocke des mesures de performances, en association avec les paramètres utilisés pour ladite exécution ;
- au début de chaque exécution de ladite application, on détermine des valeurs pour un premier sous-ensemble desdits paramètres par inférence à partir des mesures stockées correspondant à un sous-ensemble des exécutions correspondant à un deuxième sous-ensemble desdits paramètres.

Suivant des modes de réalisation préférés, l'invention comprend une ou plusieurs des caractéristiques suivantes qui peuvent être utilisées séparément ou en combinaison partielle entre elles ou en combinaison totale entre elles :

- ledit premier sous-ensemble de paramètres correspond à des paramètres d'optimisation des interfaces d'entrées/sorties associés à ladite application logicielle ;
- ledit premier sous-ensemble de paramètres correspond à des paramètres de configuration d'un module logiciel d'optimisation des entrées/sorties de ladite application logicielle ;
- ledit deuxième sous-ensemble est formé par un paramètre discriminant tel qu'un identifiant d'application ;
- ledit sous-ensemble d'exécutions est en sus déterminé par un filtrage de données aberrantes ;
- une donnée est considérée comme aberrante lorsqu'elle concerne une valeur de mesure de performance représentative d'un comportement différent des autres valeurs de ladite mesure de performance pour ledit sous-ensemble d'exécutions ;
- la détermination d'une donnée aberrante est effectuée par des comparaisons par paires entre les données relatives auxdites exécutions dudit sous-ensemble.
- des mécanismes de régressions (linéaires ou non linéaires) sont mis en oeuvre pour ladite inférence ;

Un autre aspect de l'invention concerne un dispositif pour l'optimisation des paramètres d'exécution d'une application logicielle sur une plateforme de traitement de l'information, comportant des modules logiciels pour la mise en oeuvre du procédé tel que précédemment décrit.

Un autre aspect de l'invention concerne un programme d'ordinateur comportant des moyens logiciels adaptés à la mise en oeuvre du procédé tel que précédemment décrit, lorsque que déclenché par une plateforme de traitement de l'information.

D'autres caractéristiques et avantages de l'invention apparaîtront à la lecture de la description qui suit d'un mode de réalisation préféré de l'invention, donnée à titre d'exemple et en référence aux dessins annexés.

## BREVE DESCRIPTION DES DESSINS

La figure 1 représente schématiquement et de façon fonctionnelle la boucle d'optimisation selon un mode de réalisation de l'invention.
Les figures 2a et 2b représentent schématiquement des résultats de test selon un mode de réalisation de l'invention.
Les figures 3a et 3b illustrent schématiquement des exemples selon un mode de réalisation de l'invention.
Les figures 4, 5, 6, 7 et 8 illustrent également, de façon schématique, différents aspects liés à des modes de réalisations variés de l'invention.

## DESCRIPTION DETAILLEE DE L'INVENTION

Dans la suite, on appellera « job », ou « travail », une représentation abstraite constitué d'un ensemble de métadonnées qui définissent les modalités d'exécution d'une application sur une plateforme de traitement de l'information. Ces métadonnées comprennent notamment :

- Un identifiant de l'application (nom du binaire exécutable, information provenant de l'outil d'exécution des applications sur un supercalculateur, fichiers accédées, etc.)
- La topologie matérielle utilisée (calcul et stockage)
- Des paramètres du contexte d'exécution, et en particulier les paramètres d'optimisation des interfaces d'entrées-sorties associés à cette application logicielle.

Pour un « job » donné, deux exécutions (ou « *runs* ») donneront des comportements différents, qui peuvent être liés à des accès concurrents aux données, à l'utilisation des ressources de traitement par d'autres exécutions d'application, etc.

Selon l'invention, on cherche à optimiser de façon automatique une partie des métadonnées d'un job pour son exécution. Cette optimisation se fait selon un critère prédéterminé exprimé par une ou plusieurs mesures de performance.

La solution optimale correspond à une situation où la valeur de performance d'une fonction objective est minimale ou maximale (optimum) associée à un critère prédéterminé. Par exemple, dans le cas d'une application à haute-performance (ou HPC pour « *High Performance Computing* »), un bon exemple de critère de performance à minimiser est le temps total d'exécution.

Lorsqu'un utilisateur lance un *job,* il peut choisir de ne pas fixer toutes les métadonnées correspondant à la définition de son *job,* et d'en laisser certaines libres.

Dans un cas typique, l'utilisateur souhaite lancer une application spécifique : la métadonnée « identifiant de l'application » est donc fixée.

Par contre, s'il n'a pas d'idée *a priori* de la topologie matérielle à utiliser, les métadonnées de topologie matérielle peuvent être laissées libres. De la même façon, s'il n'a pas d'idée sur la configuration des interfaces d'entrées-sorties adaptée au contexte, les paramètres d'optimisation des interfaces d'entrées-sorties ont laissés libres.

La méthode d'auto-optimisation propose alors à l'utilisateur des valeurs pour les paramètres laissés ainsi libres, qui devrait permettre d'améliorer l'exécution de l'application, par rapport à une fixation arbitraire de ces paramètres.

L'invention se base sur le principe qu'il n'est pas possible, ou pas suffisamment efficace, de chercher à modéliser a priori le comportement d'un job. Elle vise donc à effectuer des mesures afin d'observer a posteriori le comportement d'un ensemble d'exécutions qui décrivent, ou caractérisent, le job comme une « famille ».

Une famille d'applications correspond à un ensemble d'exécutions qui présentent des métadonnées en commun. Par exemple, toutes les exécutions issues de jobs ayant le même nom d'applications et la même topologie matérielle de déploiement forment une famille.

Ainsi lors de l'observation, la famille offre une mise à disposition de l'espace des paramètres libres. Plus les exécutions sont nombreuses et plus l'espace des valeurs prises par les paramètres libres est représentatif de la variation de la valeur de performance pour la famille concernée.

La recherche des valeurs optimales pour les paramètres libres est un processus itératif. Chaque itération enrichit globalement la connaissance des caractéristiques des différentes familles.

Aussi, afin de parcourir efficacement l'espace paramétrique (c'est-à-dire de façon non exhaustive), la recherche d'un optimum peut être effectuée au lancement de chaque nouvelle exécution. Cet optimum n'est probablement pas global, mais cette solution « locale » peut être ensuite réinvestie dans une nouvelle inférence des paramètres libres pour la prochaine itération et la prochaine exécution de *job* de cette famille.

Ainsi, le fait de réaliser une inférence à chaque itération permet de réaliser une boucle d'amélioration continue et une convergence vers l'optimum global.

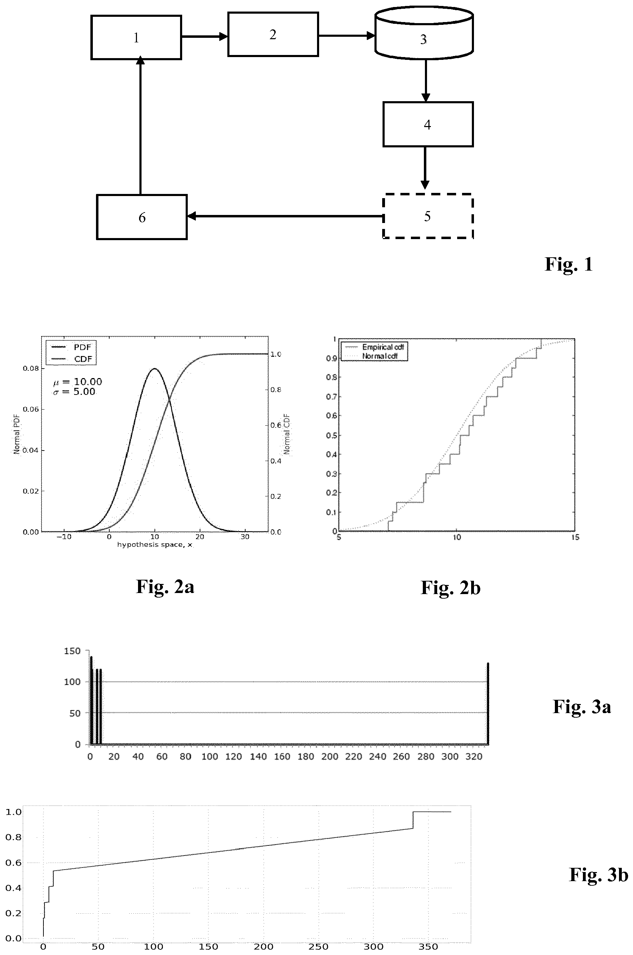

La figure 1 présente la boucle d'optimisation.

Dans un premier temps, en étape 1, on exécute l'application avec des paramètres d'exécution.

Ces paramètres d'exécution comprennent des paramètres fixés par l'utilisateur. Ces paramètres fixés peuvent notamment comprendre un paramètre discriminant tel que l'identifiant de l'application à exécuter, mais d'autres paramètres peuvent également être fixés tels que par exemple la configuration de la topologie de l'infrastructure sous-jacente.

Les paramètres d'exécution comprennent également des paramètres libres, dont on cherche justement à optimiser la valeur. Ces paramètres libres peuvent être déterminés par inférence à partir des mesures stockées dans une base 2 pour les itérations subséquentes. Lors de la première itération, les valeurs peuvent être fixés par l'utilisateur ou bien déterminés par d'autres moyens, y compris de façon aléatoire ou sur la base de valeurs « par défaut ».

Selon un aspect de l'invention, le choix entre métadonnées (paramètres) fixés et libres appartient à l'utilisateur. L'invention vise alors à optimiser les valeurs des paramètres que l'utilisateur n'a pas souhaité fixer lui-même.

Selon l'invention, tout ou partie des exécutions (ou *jobs*) sont surveillées. Des mesures de performance sont effectuées, en étape 2, et les résultats sont stockées dans une base 3 en association avec les paramètres utilisés pour l'exécution en question.

Ces mesures de performances peuvent être effectuées en temps-réel pendant l'exécution du *job,* ou a posteriori, une fois le job terminé. Ces mesures peuvent comprendre un temps d'exécution, un nombre d'entrées-sorties, un temps passé en entrées-sorties, etc.

La base de données 3 est structurée de sorte que les mesures de performances sont associées avec les valeurs de paramètres d'exécution (fixés et libres). Les données comprennent donc à la fois des mesures de performances et des métadonnées associées aux jobs.

Dans une étape 4, les données stockées dans la base 3 sont utilisées en effectuant une extraction basée sur les métadonnées (ou paramètres) fixés. Il en résulte un sous-ensemble de données (mesures de performance, métadonnées) relatives aux exécutions correspondant aux métadonnées fixés, ou, autrement dit, correspondant à la famille du job que l'utilisateur souhaite exécuter. Ce sous ensemble est donc pertinent pour réaliser l'inférence des paramètres libres.

Dans une étape 6, ces paramètres libres sont inférés à partir des valeurs des mesures de performance correspondant au sous-ensemble précédemment extraits.

Pour réaliser l'inférence la plus performante possible, il peut être intéressant d'utiliser préférentiellement les exécutions les plus pertinentes au sein de la famille considérée. En effet, certaines exécutions peuvent être considérées comme aberrantes du fait de leurs dissimilitudes avec le reste des exécutions de leur famille.

Cette sélection, ou filtrage, peut être réalisée dans une étape optionnelle 5, s'insérant entre extraction 4 des données d'une famille et l'inférence 6.

L'inférence vise à proposer des valeurs pour les paramètres libres correspondant à la solution la meilleure sur la base des connaissances acquises jusqu'à cette itération. Il s'agit d'un optimum local, qui va converger au fil des itérations vers un optimum global.

Différents mécanismes sont possibles pour la mise en oeuvre de l'inférence, dont certains accessibles à l'homme du métier.

Notamment, l'inférence peut être mise en oeuvre par des mécanismes de régression, linéaire ou non-linéaire. Ces mécanismes seront détaillées dans un mode de réalisation appliquée aux paramètres d'exécutions relatifs aux entrées-sorties, mais ils peuvent être généralisés à d'autres types de paramètres d'exécution.

Mode de réalisation pour l'optimisation des paramètres d'entrées-sorties

Selon un mode de réalisation, les paramètres libres correspondent, au moins en partie, à des paramètres d'optimisation des interfaces d'entrées-sorties associés à l'application logicielle en question.

Dans certaines situations, des modules logiciels d'optimisation des entrées/sorties peuvent être utilisés (ou « accélérateurs »). Selon un mode de réalisation, les paramètres libres peuvent alors correspondre à des paramètres (ou aux paramètres) de configuration de ces modules logiciels.

Les applications HPC consacrent une partie importante de leur temps d'exécution à effectuer des entrées/sorties. Les volumes de données qui sont traités représentent en eux même la cause principale : les réseaux utilisés pour échanger les données ayant une bande passante finie, les temps de lecture et d'écriture ne pourront être inférieurs à un minimum théorique. Cependant, d'autres facteurs peuvent avoir un impact significatif. Par exemple, l'exécution concurrente de deux applications peut entrainer des conflits d'accès à des ressources de stockage communes qui vont impacter les performances. La façon dont une application effectue ses entrées/sortie peut également impacter la performance de façon très importante dans le cas où elle sature des équipements de stockage en demandant le traitement d'un très grand nombre de « petites » opérations.

Selon un mode de réalisation, il est mis en place un dispositif de surveillance des applications exécutées dédié au profilage de l'accès aux données par les applications de Calcul Haute Performance (HPC). Celui-ci permet d'enregistrer en temps réel de nombreuses métriques relatives au déroulement de l'exécution des programmes sur le cluster HPC (volume IO, temps des IO, nombre de processus actifs, etc.). L'ensemble des métriques collectées donne une description du comportement dynamique des applications, ce qui constitue une base solide pour le développement de méthodes de paramétrisation automatique.

Dans le mode de réalisation décrit ci-dessous, on considère que seul des paramètres libres relatifs à l'interface entrées/sorties sont à inférer.

Dans un tel cas, le filtrage 4 agrège toutes les exécutions qui présentent le même discriminant (même identifiant d'application) et la même topologie que le job que l'on souhaite lancer. Cette étape ne sera pas détaillée ici car elle consiste simplement à sélectionner des exécutions par une requête sur les métadonnées fixées dans la base de données 3.

Les étapes de classification 5 et d'inférence 6 sont plus particulièrement détaillées.

L'étape de classification 5 vise à détecter les exécutions qui ne sont pas pertinentes pour l'étape d'inférence 6. Deux causes principales peuvent mener à l'exclusion d'une exécution lors de cette étape.

- le comportement entrées-sorties (I/O pour « input/output » en langue anglaise) est très différent comparé aux autres exécutions de la même famille. Il est alors classé comme aberrant (ou « *outlier* » en anglais);
- le comportement entrées/sorties, I/O, d'un sous-ensemble d'exécutions divergent lentement du comportement initial stable. Le job dont émane cet ensemble d'exécutions divergent est alors caractérisé comme instable (il peut s'agir d'une application en cours de développement, changement lent des performances matérielles...).

Pour détecter ces exécutions aberrantes qu'il faut exclure avant l'inférence, la phase de classification utilise l'ensemble des données disponibles concernant leurs comportements I/O.

Ces données, représentatives du comportement IO, sont l'ensemble des métriques collectées.

Une méthode de classification proposée est basée sur une comparaison par paires de toutes les exécutions appartenant à une même famille. Ainsi pour chaque paire d'exécution, les mesures collectées sont comparées en utilisant les méthodes statistiques décrites dans la suite du document. Il résulte de cette comparaison autant de distances que de mesures de performance par paire d'exécutions comparées, qui sont alors agrégées pour obtenir une distance unique entre deux exécutions.

Finalement, une matrice de distances NxN, relative à la comparaison de toutes les N exécutions entre elles, permet de réaliser une classification hiérarchique.

Les mesures collectées représentent l'évolution au cours du temps (par tranche de 5 secondes par exemple) du comportement IO d'une exécution par le prisme d'une caractéristique (par exemple: volume de lecture, temps des écritures de tailles entre 1 Mo et 4 Mo, ...). Chacune des mesures peut donc correspondre à une séquence de valeurs évoluant au cours du temps.

Dans une approche classique de classification, des caractéristiques scalaires (« *features* » en langue anglaise) pourraient être extraites des séquences de mesures. Ceci permettrait ensuite de calculer une distance entre les vecteurs de caractéristiques de différentes exécutions, car tous les vecteurs de caractéristiques ont la même dimension (i.e. le nombre de caractéristiques extraites).

A l'inverse, dans l'approche qui a été choisie pour classifier les exécutions, nous avons fait le parti pris de comparer directement des séquences 2 à 2. Cependant, les exécutions ne présentent pas nécessairement des durées totales similaires. Ceci nécessite de formater les séquences de sorte qu'elles soient comparables par des méthodes statistiques (décrites dans la suite du document) acceptant ce format.

L'utilisation de tests d'hypothèses non-paramétriques de « *goodness-of-fit* » est un bon moyen de comparer deux échantillons. Les tests de Kolmogorov-Smirnov et Cramér-von Mises sont de bons candidats à cette fin et seront détaillés dans la suite du document. Ces deux tests utilisent le même formatage des échantillons comparés : une fonction de distribution cumulée (CDF pour « *Cumulative Distribution Function* » en anglais).

La figure 2a présente les PDF (densité de probabilité) et CDF de la loi normale, la CDF étant donc la version cumulée de la PDF. On note, qu'une CDF est croissante et bornée entre 0 et 1. La figure 2b présente la différence entre une CDF et une CDF empirique qui est une instance discrète représentant un échantillon issu de la loi continue.

A partir des séquences de mesures IO, on peut extraire deux façons de représenter les données de ces séquences sous forme de CDF empiriques.

### CDF « temporelle »

Une CDF empirique correspond à la version cumulée d'un histogramme normalisé (i.e. une PDF empirique). Ce format fait particulièrement écho à la manière dont les mesures IO sont collectées. En effet, par tranche de 5s, les évènements associés à chaque mesures sont intégrés, formant ainsi un histogramme où chaque intervalles « bin » serait une tranche de temps de 5s.

Notez que dans la suite du document, nous parlerons par abus de langage de CDF au lieu de CDF empirique, car les données considérées sont toujours issues d'échantillons.

La figure 3a représente une séquence de données pour la mesure « processus IO actifs. »

La figure 3b illustre la CDF correspondant à la séquence présentée précédemment. En utilisant cette représentation, nous verrons par la suite que l'on peut obtenir une distance entre les séquences d'une mesure pour différents jobs.

### CDF « valeur »

Une manière plus classique de représenter les données d'une séquence est de la considérer comme un simple échantillon, dont l'ordre des données n'importe pas. Dans ce cas, la CDF représente la distribution des valeurs contenues dans la séquence.

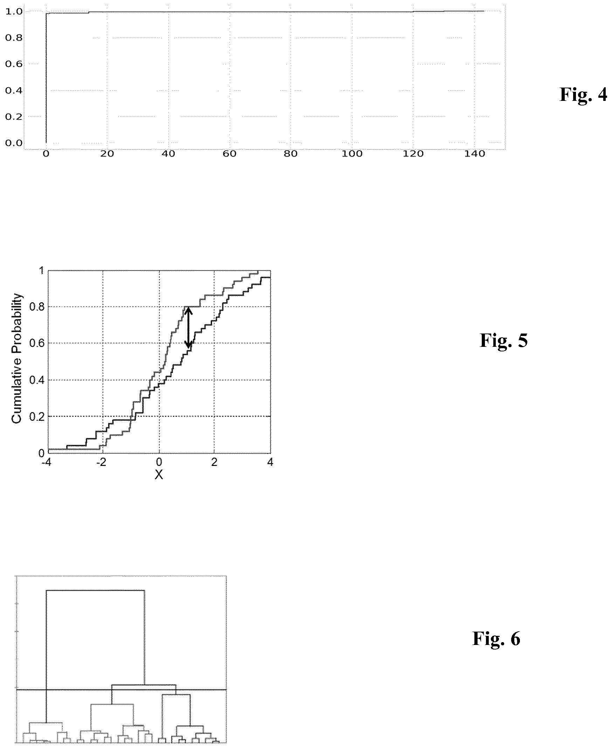

La figure 4 représente la CDF obtenue dans ce cas pour la séquence d'origine de la figure 3b.

Dans cette version, on remarque que l'aspect temporel de la séquence n'est plus retranscrit par la CDF.

### Comparaison deux à deux (par paires)

En utilisant la représentation statistique présentée précédemment (CDF), on peut utiliser des tests d'hypothèse non-paramétriques pour comparer deux CDF et ainsi obtenir une distance entre ces CDF.

Les tests de Kolmogorov-Smirnov et de Cramér-von Mises permettent de comparer deux échantillons en utilisant leurs CDF.

### Test de Kolmogorov-Smirnov

Le test de Kolmogorov-Smirnov à deux échantillons compare directement deux échantillons de données pour déterminer s'ils sont issus de la même loi de distribution, indépendamment de la connaissance de cette loi.

Le test recherche toujours la distance maximale Ds entre deux CDF Fm et Ms, de taille n1 et n2 respectivement :

$$D_S = \sup_S \left| F_m(x) - M_S(x) \right|$$

La figure 5 montre le principe de cette version à deux échantillons.

A partir de la statistique Ds, il possible de calculer la probabilité ps, appelée p-Value, que les deux CDF testées soient issues de la même loi de distribution :

$$p_S(\lambda) = 2 \sum_{k=1}^{+\infty} (-1)^{k+1} e^{-2k^2\lambda^2}$$

Avec $\lambda = \sqrt{n}$. $D_S$ et n=n1.n2

### Test de Cramér-von Mises

Ce test, qui est connu pour être une alternative au test de Kolmogorov-Smirnov, teste la même hypothèse selon la même procédure d'utilisation. Le test de Cramér-von Mises se différencie par le critère utilisé pour générer la statistique Ds. Là où le test de Kolmogorov-Smirnov recherchait la distance maximale entre deux CDF, le test de Cramér-von Mises calcule l'intégrale de la différence entre les deux CDF.

Ds est calculé en prenant en compte deux CDF empiriques $F_m$={x1, ...xN} et $M_S$={y1, ..., yM} et :

$$D_S = \frac{U}{NM(N+M)} - \frac{4NM-1}{6(N+M)}$$

Avec U tel que :

$$U = N \sum_{i=1}^{N} (r_i - i)^2 + M \sum_{j=1}^{M} (s_j - j)^2$$

avec ri et sj respectivement les rangs dans l'échantillon combiné de xi et yj. Une probabilité que les deux échantillons soient issus de la même loi de distribution est également déduite de la statistique de Cramér-von Mises.

A noter que, le calcul de la statistique de Cramér-von Mises demande plus de calculs que celle du test de Kolmogorov-Smirnov.

### Calcul de distance

En utilisant un des tests décrit précédemment, on dispose d'une mesure pour mettre en évidence des distances entre deux jobs (en réalité on dispose même de 4 différentes possibilités de mesures de distance : 2x Ds ou Ps).

Pour un ensemble de N jobs, la comparaison 2 à 2 des séquences d'une mesure permet d'obtenir une matrice NxN des distances 2 à 2 entre jobs. Ainsi, en comparant toutes les mesures IO collectées par l'IOI (par exemple 68 mesures différentes), on peut obtenir 68 matrices de distances, chacune de dimension NxN.

Classification hiérarchique

La classification hiérarchique est une méthode de classification automatique très utilisée en analyse de données. A partir d'un ensemble Ω de n individus, son but est de répartir ces individus dans un certain nombre de classes. Le qualificatif hiérarchique vient du fait qu'elle produit une hiérarchie H, l'ensemble des classes à toutes les étapes de l'algorithme, qui vérifie les propriétés suivantes :

- Ω ∈ H: au sommet de la hiérarchie, lorsque l'on groupe de manière à obtenir une seule classe, tous les individus sont regroupés
- b' ω ∈ Ω, { co } EH : en bas de la hiérarchie, tous les individus se trouvent seuls
- b' (h,h' ) EH2, alors h∩h'= ∅ ou h ⊂ h' ou h'⊂ h : si l'on considère deux classes du regroupement hiérarchique, alors soit elles ne partagent pas d'individus en commun, soit elles s'incluent l'une dans l'autre (ou réciproquement)

La méthode suppose que l'on dispose d'une mesure de similarité (ou de dissimilarité) entre tous les individus. A partir de là, deux manières de faire sont possibles :

- La classification ascendante (ou agglomérative) hiérarchique (CAH) qui présuppose une situation où tous les individus sont seuls dans une classe, puis sont rassemblés en classes de plus en plus grandes
- La classification descendante hiérarchique (CDH) part, elle au contraire, d'une seule classe contenant tous les individus, pour diviser itérativement ce groupe initial en un nombre de classes croissant jusqu'à ce que tous les individus se trouvent isolés.

Un dendrogramme est la représentation graphique d'une classification hiérarchique. Il se présente souvent comme un arbre binaire dont les feuilles sont les individus alignés sur l'axe des abscisses. Lorsque deux classes ou deux individus se rejoignent, des traits verticaux sont dessinés de l'abscisse des deux classes jusqu'à l'ordonnée puis ils sont reliés par un segment horizontal.

La figure 6 présente un exemple de dendrogramme qui, pour le seuil choisi (trait horizontal) permet d'identifier 3 classes.

Le dendrogramme est construit à partir de la matrice des distances qui contient les distances 2 à 2 des N éléments à classer. Les distances entre les éléments sont matérialisées sur le dendrogramme par la longueur des branches qui relient deux noeuds. Donc la distance entre deux éléments (i.e. feuilles) est représentée par la distance verticale entre le niveau des feuilles et le noeud qui relie les deux feuilles.

Agrégation des matrices de distances

Dans notre cas, nous avons 68 matrices de distance (ou plus généralement, autant que de mesures de performance collectées), chacune contenant les distances entre jobs 2 à 2 pour une métrique particulière. Afin de construire un dendrogramme permettant de classer notre ensemble de jobs, on doit agréger les matrices de distance en fonction des mesures pour en obtenir une seule qui contiendra les distances « totale » entre jobs.

L'agrégation des matrices de distances que nous avons choisie pour montrer les résultats de classification dans la section suivante est une simple somme des 68 matrices de distance.

Cependant, avec une connaissance métier adaptée, la phase d'agrégation peut être l'opportunité de n'utiliser que certaines mesures et/ou de pondérer les plus pertinentes.

Classification

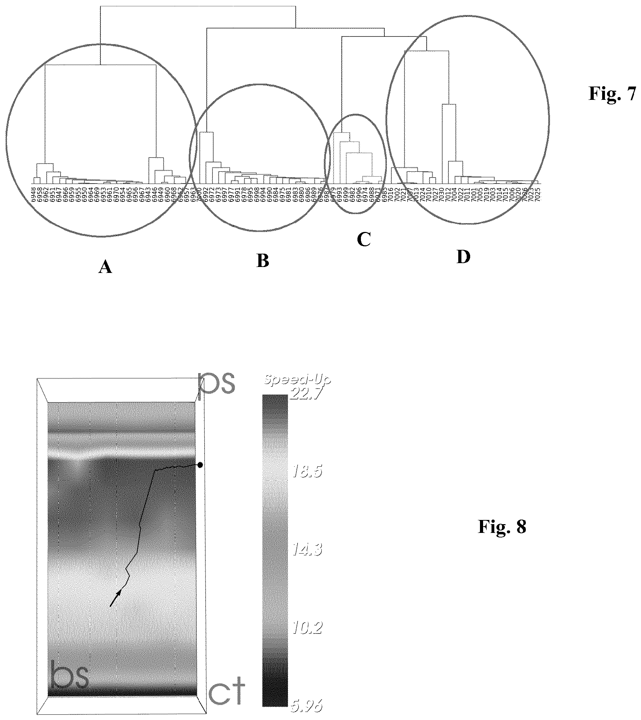

Une fois la matrice de distance « totale » générée, on peut classer les jobs en utilisant une méthode de classification hiérarchique. La figure 7 présente le résultat d'une classification de 90 exécutions, en utilisant la mesure de distance entre jobs décrite précédemment.

L'ensemble de ces exécutions a été généré à partir de 3 jobs différents. Cependant, le dendrogramme de la figure 7 met en évidence 4 classes différentes (A, B, C, D). En analysant ce résultat, nous avons identifié que les classes C et D contiennent toutes les deux les exécutions issus d'un seul job. La séparation en deux classes de cet ensemble d'exécutions est explicable par le choix du seuil qui a été utilisé (trait noir).

Un seuil légèrement plus élevé aurait permis de considérer les deux classes C et D comme une seule. De même, un seuil légèrement plus faible aurait conduit à identifier 5 classes.

Une des difficultés dans l'utilisation de ces méthodes de classification hiérarchique est donc le choix de ce seuil, car il a une grande influence sur le nombre de classes identifiées in fine. Une solution généralement adoptée consiste à fixer la valeur du seuil relativement à la distance maximale entre deux éléments (e.g. 70% de la distance maximale). Mais dans le cas où les éléments des classes présentent des distances hétérogènes (e.g. la classe D vs classe B) il est difficile de trouver un seuil qui permette de bien classer les éléments.

Cependant, cette difficulté est moindre pour notre cas d'utilisation qui se concentre sur la détection de données aberrantes. En effet, l'ensemble des exécutions utilisées lors de la classification sont, de facto, issus d'une famille de job et ils devraient donc tous être regroupé en une seule classe. Les exécutions aberrantes sont donc facilement identifiables avec un seuil relatif, basé par exemple sur la distance moyenne ou médiane entre toutes les exécutions.

La méthode de classification des exécutions qui a été présentée permet d'identifier les exécutions aberrantes dans un ensemble d'exécutions issues d'une même famille de jobs.

Pour cela, les distances entre exécutions sont calculées à partir des distances entre les séquences de mesures IO collectées. La comparaison des séquences de mesures est réalisée à partir de tests statistiques, puis les distances sont agrégées pour l'ensemble des mesures comparées afin d'obtenir la distance totale entre les exécutions. La matrice de distances générée permet de classer les exécutions selon une méthode de classification hiérarchique, les exécutions aberrantes étant détectées à partir d'un seuil relatif.

Cette détection des exécutions aberrantes permet de ne sélectionner que les exécutions pertinentes pour la phase d'inférence des métadonnées.

### Inférence des métadonnées

Au lancement d'une nouvelle exécution, nous choisissons de laisser libre certaines métadonnées, pour lesquelles nous allons inférer des valeurs optimales.

Par le filtrage en famille et la classification, nous sélectionnons un ensemble d'exécutions pertinentes pour l'inférence comme précédemment décrit. Pour chacune de ces exécutions, nous extrayons l'ensemble des données utiles pour l'inférence des métadonnées libres.

Dans l'ensemble de ces données, certaines variables sont dites dépendantes (expliquées), d'autres en revanche sont des variables indépendantes (explicatives). Par nature, les métadonnées que nous cherchons à inférer sont des variables indépendantes. Nous supposons qu'il existe une relation entre les variables dépendantes et indépendantes. Le principe de la régression est de construire un modèle qui décrit cette relation.

Une fois le modèle obtenu par régression, la recherche des paramètres optimaux à appliquer à un système peut être réalisée en utilisant des algorithmes d'optimisation.

Pour notre cas d'usage, on cherche à inférer les paramètres optimaux d'un accélérateur d'entrées/sorties par rapport à une mesure de performance.

La figure 8 présente l'optimisation de 3 paramètres des « *Fast IO Libraries* » sur le critère de maximisation du speed-up. Le champ de speed-up est ici généré par l'interpolation d'un ensemble de mesures de performance pour un grand nombre d'exécutions lancées par une application de test. Les valeurs des paramètres des *Fast IO Libraries* optimisées sont les suivantes :

- SRO _CLUSTER THRESHOLD (ct)
- SRO _DSC _BINSIZE (bs)
- SRO _PREFETCH_SIZE (ps)

Dans cette application, la fonction qui sert de critère dans la détermination de la meilleure solution du problème d'optimisation (fonction objective) est obtenue par l'interpolation du champ des speed-up échantillonnés (264 mesures collectés).

Dans un contexte de production, i.e. lorsque l'on ne peut consciencieusement évaluer la valeur de performance d'une application en un grand nombre de points, il faut alors ajouter une étape de régression multiple qui permet de modéliser l'espace paramétrique comme une fonction continue. Celle-ci peut alors servir, avantageusement, de fonction objective à la méthode d'optimisation. C'est ce que nous détaillerons dans la partie suivante.

### Modélisation de la variation de la performance par régression

Le processus de régression permet d'obtenir un modèle continu qui modélise la variation de la performance (e.g. le temps d'exécution de l'application) en fonction des paramètres d'accélérateur.

Il est possible de catégoriser les techniques de régression en fonction du type de relation (e.g. linéaire ou non-linéaire), du nombre de variables indépendantes (e.g. simple ou multiple), et du nombre de variables dépendantes (e.g. univariée ou multivariée).

Dans notre cas d'usage, nous souhaitons déterminer plusieurs paramètres d'accélérateur par rapport à la valeur de performance. Il s'agit donc d'une régression multiple, univariée.

Dans une application concrète de l'inférence des paramètres du module SRO des « Fast IO Libraries, » nous avons expérimenté plusieurs méthodes :

### Méthode de régression linéaire : Bayesian Ridge Régression (BRR)

BRR est une simple technique de régression linéaire utilisant la régularisation de type L-2.

Elle a l'avantage de fournir un modèle simple et explicatif, mais elle ne permet pas de bien traduire la relation qui existe entre les différents paramètres et la mesure de performance.

Pour mieux tenir compte de la complexité inhérente au problème de paramétrisation, il existe des méthodes avancées qui permettent de prendre en compte les aspects de dépendance non linéaires entre les variables.

### Méthodes de régression non-linéaire basées sur la technique du noyau

Les méthodes basées sur la technique du noyau permettent de transformer un problème non-linéaire dans l'espace de départ, en un problème linéaire dans l'espace d'arrivée. L'opérateur de transformation étant difficile à déterminer en tout point, la méthode intègre la technique du noyau (« kernel methods »). Celle-ci, utilise les propriétés de l'espace d'arrivée en établissant pour deux points une mesure de similitude. Il existe différents types de noyaux (e.g. « *radial basis function* », polynomial, linéaire, exponentiel, etc.).

La méthode « *Support Vectorfor Régression* » (SVR) est une variante « Noyau » du Support Vector Machine (SVM ou machine à vecteurs supports) pour la régression. Elle permet d'obtenir un modèle éparse se basant uniquement sur des vecteurs de support. Ce modèle permet une prédiction rapide.

La méthode « *Gaussian Process for Régression* » (GPR) est la version noyau de « *Bayesian Régression* » (régression bayésienne).

Elle présente l'avantage d'être plus rapide à l'entrainement, et fonctionne bien, y compris dans le cas de données incomplètes.

Dans l'évaluation de ces deux méthodes, dans notre cas d'usage, nous avons utilisé le noyau « *Radial Basis Function* » (RBF) :

$$K(x,y) = \exp(-\frac{1}{2\sigma^2}\|x-y\|^2)$$

Contrairement au noyau polynomial, qui nécessite de déterminer apriori le degré requis pour la fonction modèle, le noyau RBF fonctionne sans apriori.

Quelle que soit la méthode de régression utilisée, nous parvenons à un modèle qui permet d'évaluer une valeur de performance, pour n'importe quelle valeur de paramètres de l'accélérateur.

Ce modèle, permet une recherche de solutions optimales dans une stratégie de convergence.

Optimisation des paramètres d'accélérateur

Ayant estimé une fonction modélisant la relation entre les paramètres d'accélérateur et les valeurs de performance, il est possible d'utiliser des algorithmes d'optimisation pour trouver des paramètres optimaux.

Il existe différents types d'algorithmes d'optimisation numérique que l'on peut classifier en deux groupes :

- Les méthodes de gradient
  Ce sont des méthodes qui utilisent la notion de dérivée de la fonction objective pour déterminer rapidement les extrema.
- Les méthodes indépendantes du gradient
  Ce sont des méthodes qui fonctionnement sans information lié au caractère différentiable de la fonction objective.

Nous avons expérimenté plusieurs méthodes d'optimisation incluant ou non le calcul du gradient. Pour la recherche de paramètres, dont l'espace présente souvent de multiples optima locaux, les méthodes indépendantes du gradient offre d'avantage de possibilités de converger vers l'optimum global, contrairement aux méthodes de gradient qui se laissent, dans nos expériences, souvent piéger par des optima locaux.

Dans une application concrète de l'inférence des paramètres du module SRO des « *Fast IO libraries* » visant à minimiser le temps d'exécution d'une application, nous avons expérimenté plusieurs méthodes :

Algorithme de Nelder-Mead (NM)

La méthode de Nelder-Mead est un algorithme d'optimisation non-linéaire qui cherche à minimiser une fonction continue dans un espace à plusieurs dimensions.

Appelé également « *downhill simplex method* », l'algorithme exploite le concept de simplexe qui est un polytope de N+1 sommets dans un espace à N dimensions. Partant initialement d'un tel simplexe, celui-ci subit des transformations simples au cours des itérations : il se déforme, se déplace et se réduit progressivement jusqu'à ce que ses sommets se rapprochent d'un point où la fonction est localement minimale.

Algorithme « *Particle Swarm Optimisation* » (PSO)

Contrairement à l'algorithme de Nelder-Mead, le « *Particle Swarm Optimisation* » adopte une approche stochastique, en utilisant une modélisation de type multi-agent. Cette méthode essaime, dans l'espace des variables, de multiples particules, qui se partagent les valeurs évaluées de la fonction objective en différents points, contribuant à la connaissance globale de l'essaim de particules.

Ce partage d'information peut s'effectuer de deux manières : une locale qui limite l'échange aux particules du voisinage proche, une autre globale, qui assure un partage privilégié entre la particule ayant la meilleure évaluation de la fonction objective et les autres

La stratégie d'auto-optimisation de métadonnées dites libres a été illustrée par un mode de réalisation consistant à déterminer les paramètres d'un accélérateur IO qui permettent d'optimiser la performance d'une application (i.e. minimiser le temps d'exécution).

L'approche choisie consiste à se servir des données collectées par l'IO Instrumentation sur des exécutions passées, pour inférer des paramètres optimaux. Pour cela, seules les exécutions pertinentes sont sélectionnées par, successivement, leurs métadonnées fixes (étape 4) et leurs comportements IO temporel (étape 5).

Cet ensemble d'exécution est ensuite utilisée pour obtenir, par régression, un modèle de la valeur de performance en fonction des paramètres d'accélérateur. Finalement, les paramètres à utiliser sont déterminés à partir du modèle obtenu par des méthodes d'optimisation qui optimise une fonction de cout.

L'exécution lancée avec les paramètres inférés est elle-même surveillée et les données collectées serviront lors d'une prochaine inférence. De cette manière, la base des exécutions augmente avec les inférences successives, augmentant du même coup la connaissance du champ de performance dans l'espace des paramètres d'accélérateur. A chaque itération, cette connaissance grandissante permet d'obtenir un modèle régressé de plus en plus proche du modèle théorique, bouclant ainsi un cercle vertueux d'auto-optimisation qui converge vers un optimum global pour le job considéré.

Bien entendu, la présente invention n'est pas limitée aux exemples et au mode de réalisation décrits et représentés, mais elle est susceptible de nombreuses variantes accessibles à l'homme de l'art.

## Revendications

1. Procédé pour l'optimisation des paramètres d'exécution d'une application logicielle sur une plateforme de traitement de l'information, consistant à optimiser de façon itérative lesdits paramètres à chaque exécution de ladite application, dans lequel

    - pour chaque exécution (1) de ladite application, on effectue (2) et stocke (3) des mesures de performances, en association avec les paramètres utilisés pour ladite exécution ;

    **caractérisé en ce que**:

    - au début de chaque exécution de ladite application, on détermine (4, 6) des valeurs pour un premier sous-ensemble desdits paramètres par inférence (6) à partir des mesures stockées correspondant à un sous-ensemble des exécutions correspondant à un deuxième sous-ensemble desdits paramètres.

2. Procédé selon la revendication précédente, dans lequel ledit premier sous-ensemble de paramètres correspond à des paramètres d'optimisation des interfaces d'entrées/sorties associés à ladite application logicielle.

3. Procédé selon la revendication précédente, dans lequel ledit premier sous-ensemble de paramètres correspond à des paramètres de configuration d'un module logiciel d'optimisation des entrées/sorties de ladite application logicielle ;

4. Procédé selon l'une des revendications précédentes, dans lequel ledit deuxième sous-ensemble est formé par un paramètre discriminant tel qu'un identifiant d'application.

5. Procédé selon l'une des revendications précédentes, dans lequel ledit sous-ensemble d'exécutions est en sus déterminé par un filtrage (5) de données aberrantes.

6. Procédé selon la revendication précédente, dans lequel une donnée est considérée comme aberrante lorsqu'elle concerne une valeur de mesure de performance représentative d'un comportement différent des autres valeurs de ladite mesure de performance pour ledit sous-ensemble d'exécutions

7. Procédé selon la revendication précédente, dans lequel la détermination d'une donnée aberrante est effectué par des comparaisons par paires entre les données relatives auxdites exécutions dudit sous-ensemble.

8. Procédé selon l'une des revendications précédentes, dans lequel des mécanismes de régressions sont mis en oeuvre pour ladite inférence.

9. Dispositif pour l'optimisation des paramètres d'exécution d'une application logicielle sur une plateforme de traitement de l'information, comportant des modules logiciels pour la mise en oeuvre du procédé selon l'une quelconque des revendications précédentes.

10. Programme d'ordinateur comportant des moyens logiciels adaptés à la mise en oeuvre du procédé selon l'une des revendications 1 à 8 lorsque que ledit programme est déclenché par une plateforme de traitement de l'information.

## Patentansprüche

1. Verfahren zur Optimierung der Ausführungsparameter einer Softwareanwendung auf einer Informationsverarbeitungsplattform, das darin besteht, die Parameter bei jeder Ausführung der Anwendung iterativ zu optimieren, wobei

    - für jede Ausführung (1) der Anwendung Leistungsmessungen durchgeführt (2) und gespeichert (3) werden, in Verbindung mit den Parametern, die für die Ausführung verwendet werden;

    **dadurch gekennzeichnet, dass:**

    - zu Beginn jeder Ausführung der genannten Anwendung Werte für eine erste Teilmenge der genannten Parameter durch Inferenz (6) aus den gespeicherten Messungen bestimmt werden (4, 6), die einer Teilmenge der Ausführungen entsprechen, die einer zweiten Teilmenge der genannten Parameter entsprechen.

**2.** Verfahren nach dem vorstehenden Anspruch, wobei die erste Teilmenge der Parameter den Optimierungsparametern der mit der Softwareanwendung verbundenen Ein-/Ausgabeschnittstellen entspricht.

**3.** Verfahren nach dem vorstehenden Anspruch, wobei die erste Teilmenge der Parameter den Konfigurationsparametern eines Softwaremoduls zur Optimierung der Ein-/Ausgabe der Softwareanwendung entspricht;

**4.** Verfahren nach einem der vorstehenden Ansprüche, wobei die zweite Teilmenge durch einen diskriminierenden Parameter wie eine Anwendungskennung gebildet wird.

**5.** Verfahren nach einem der vorstehenden Ansprüche, wobei die Teilmenge der Ausführungen zusätzlich durch Filtern (5) von abweichenden Daten bestimmt wird.

**6.** Verfahren nach dem vorstehenden Anspruch, wobei ein Datenwert als abweichender Datenwert betrachtet wird, wenn er sich auf einen Leistungsmesswert bezieht, der ein Verhalten repräsentiert, das sich von anderen Leistungsmesswerten für die Teilmenge von Ausführungen unterscheidet

**7.** Verfahren nach dem vorstehenden Anspruch, wobei die Bestimmung eines abweichenden Datenwerts durch paarweise Vergleiche zwischen den Daten, die sich auf die genannten Ausführungen der Teilmenge beziehen, durchgeführt wird.

**8.** Verfahren nach einem der vorstehenden Ansprüche, wobei Regressionsmechanismen für die genannte Inferenz implementiert werden.

**9.** Vorrichtung zur Optimierung der Ausführungsparameter einer Softwareanwendung auf einer Informationsverarbeitungsplattform, die Softwaremodule zur Durchführung des Verfahrens nach einem der vorstehenden Ansprüche umfasst.

**10.** Computerprogramm mit Software-Einrichtungen, die zur Durchführung des Verfahrens nach einem der Ansprüche 1 bis 8 geeignet sind, wenn das Programm von einer Informationsverarbeitungsplattform ausgelöst wird.

**Claims**

**1.** A method for optimizing the run parameters of a software application on an information processing platform, consisting in iteratively optimizing said parameters on each execution of said application, wherein

- for each execution (1) of said application, performance measurements are taken (2) and stored (3), in association with the parameters used for said execution;

**characterized in that:**

- at the beginning of each execution of said application, values are determined (4, 6) for a first subset of said parameters by inference (6) from stored measurements corresponding to a subset of the executions corresponding to a second subset of said parameters.

**2.** The method according to the preceding claim, wherein said first subset of parameters corresponds to parameters for optimizing the input/output interfaces associated with said software application.

**3.** The method according to the preceding claim, wherein said first subset of parameters corresponds to configuration parameters of a software module for optimizing the inputs/outputs of said software application;

**4.** The method according to one of the preceding claims, wherein said second subset is formed by a discriminating parameter such as an application identifier.

**5.** The method according to one of the preceding claims, wherein said subset of executions is further determined by filtering (5) outlier data.

**6.** The method according to the preceding claim, wherein a data item is considered to be an outlier when it relates to a performance measurement value representative of a behavior differ from the other values of said performance measurement for said subset of executions

**7.** The method according to the preceding claim, wherein the determination of an outlier data item is carried out by comparing pairs between the data items relating to said executions of said subset.

**8.** The method according to one of the preceding claims, wherein regression mechanisms are implemented for said inference.

**9.** A device for optimizing the execution parameters of a software application on an information processing platform, comprising software modules for implementing the method according to any one of the preceding claims.

**10.** A computer program comprising software means suitable for implementing the method according to one of claims 1 to 8 when said program is triggered by an information processing platform.

Fig. 1

Fig. 2a

Fig. 2b

Fig. 3a

Fig. 3b

**Fig. 4**

**Fig. 5**

**Fig. 6**

**Fig. 7**

A      B      C      D

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. LIU ; J. COPE ; P. CARNS ; C. CAROTHERS ; R. ROSS ; G. GRIDER ; A. CRUME ; C. MALTZAHN.** On the rôle of burst buffers in leadership-class storage systems. *IEEE 28th Symposium on Mass Storage Sytems and Technologies (MSST,* 2012
- **M. MESNIER ; G. R. GANGER ; E. RIEDEL.** Object-based storage. *IEEE Communications Magazine,* 2003, vol. 41 (8), 84-90
- **BREITENFELD, M. SCOT et al.** DAOSfor Extreme-scale Systems in Scientific Applications. *arXiv,* 2017
- **CHEN CHEN-CHUN et al.** Using Deep Learning to Predict and Optimize Hadoop Data Analytic Service in a Cloud Platform. *2017 IEEE 15TH INTL CONF ON DEPENDABLE, AUTONOMIC AND SECURE COMPUTING, 15TH INTL CONF ON PERVASIVE INTELLIGENCE AND COMPUTING, 3RD INTL CONF ON BIG DATA INTELLIGENCE AND COMPUTING AND CYBER SCIENCE AND TECHNOLOGY CONGRESS(DASC/PICOM/DATACOM/CYBERSCI,* 06 Novembre 2017, 909-916